**Europäisches Patentamt**

**European Patent Office**

**Office européen des brevets**

(19)

(11) Veröffentlichungsnummer: **0 510 317 A2**

## (12) EUROPÄISCHE PATENTANMELDUNG

(21) Anmeldenummer: **92102458.4**

(22) Anmeldetag: **14.02.92**

(51) Int. Cl.5: **B60H 1/00**

(30) Priorität: **20.04.91 DE 4113014**

(43) Veröffentlichungstag der Anmeldung:
**28.10.92 Patentblatt 92/44**

(84) Benannte Vertragsstaaten:
**DE ES FR GB SE**

(71) Anmelder: **MAX KAMMERER GMBH**
**Hohemarkstrasse 22**
**W-6370 Oberursel/Taunus(DE)**

(72) Erfinder: **Schiller, Werner, Dipl.-Ing.**
**Im Heppensee 30**
**W-6106 Erzhausen(DE)**
Erfinder: **Modenbach, Thomas**
**Ziegenhainer Strasse 152**
**W-6000 Frankfurt am Main 50(DE)**

(74) Vertreter: **Eyer, Eckhardt Philipp, Dipl.-Ing. et al**
**Patentanwälte Eyer & Linser**
**Robert-Bosch-Strasse 12a**
**W-6072 Dreieich(DE)**

(54) **Regler zur Innentemperaturregelung von Kraftfahrzeugen.**

(57) Regler zur Innenraumtemperaturregelung von Kraftfahrzeugen mit einem einen Sollwertgeber (1) und ein Vergleichsglied (2) enthaltenden Gehäuse (3), einem Lüfter (4) mit Antriebsmotor (5) und einem Temperaturfühler (6) als Istwert-Aufnehmer, der temperatur-entkoppelt gegenüber den übrigen Teilen des Reglers und sonstigen Wärme abgebenden Aggregaten des Kraftfahrzeuges im Ansaugluftstrom des ansaugseitig mit dem Fahrzeuginnenraum verbundenen Lüfters (4) angeordnet ist, dadurch gekennzeichnet, daß der Temperaturfühler (6) und der Lüfter (4) offen im Reglergehäuse (3) angeordnet sind. Als Lüfter (4) ist ein Axial-Radial-Lüfter vorgesehen, in dessen axialem Ansaugluftstrom der Temperaturfühler (6) angeordnet ist. Der Lüfter (4) ist zusammen mit seinem Antriebsmotor (5) auf der die Regler-Bauteile tragenden Leiterplatte (7) befestigt. Die Ansaugöffnung für den Luftstrom ist von einem Stutzen (8) gebildet bzw. begrenzt und der Temperaturfühler im wesentlichen mittig in dem Stutzen gehalten und direkt elektrisch mit den der Istwert-Auswertung dienenden Bauteilen der Leiterplatte verbunden. Der Reglermotor ist elektronisch kommutiert.

Rank Xerox (UK) Business Services

Die Erfindung geht aus von einem Regler gemäß dem Oberbegriff des Patentanspruches 1.

Die Erzielung einer störungs- und insbesondere fehlerfreien Regelung der Temperatur von Kraftfahrzeug-Innenräumen ist insbesondere von einer einwandfreien Temperatur-Entkoppelung des Istwertfühlers abhängig, d.h. es muß sorgfältig dafür Sorge getragen werden, daß der Temperaturfühler ausschließlich der aus dem Fahrgastraum angesaugten Luft bzw. der von diesem Luftstrom mitgeführten Wärme ausgesetzt und vor allen anderweitigen Temperatureinflüssen, insbesondere vor der im Regler selbst erzeugten Wärme geschützt wird. Der Temperaturfühler wird daher bisher in einem geschlossenen, je nach äußeren Platzverhältnissen mehr oder weniger langen Luftführungskanal angeordnet, der sich zwischen einer zum Fahrgastraum führenden Ansaugöffnung und einem Lüfter - in der Regel ein Radial-Lüfter - erstreckt und sorgfältig gegen die in seiner Umgebung angeordneten, Wärme erzeugenden Aggregate, etwa ein Radio und den Temperaturregler selbst abgeschirmt ist. Zu diesem Zweck ist der Ansaugkanal in der Regel von einem Doppelmantelrohr aus einem schlecht wärmeleitenden Material, insbesondere Kunststoff gebildet, durch das eine im allgemeinen befriedigende Temperatur-Entkoppelung erzielt werden kann.

Die bekannten Regler sind aufgrund der zur Temperatur-Entkoppelung erforderlichen Maßnahmen konstruktiv außerordentlich aufwendig und beanspruchen einen erheblichen Platz, der insbesondere im Bereich des Armaturenbrettes eines Kraftfahrzeuges, in dem die Regeleinrichtung im allgemeinen angeordnet ist, in der Regel nicht zur Verfügung steht.

Der vorliegenden Erfindung liegt als Aufgabe die Schaffung eines Reglers der beschriebenen Art zugrunde, mit dem bei wesentlicher Verringerung des Platzbedarfes eine verbesseerte Temperatur-Entkoppelung erzielt wird.

Diese Aufgabe wird durch einen Regler mit den im Patentanspruch 1 wiedergegebenen Merkmalen gelöst.

Der erfindungsgemäße Regler weist überraschend trotz der unmittelbaren Eingliederung in das Gehäuse des sich im Betrieb erwärmenden und diese Wärme an die unittelbare Umgebung abgebenden Reglers eine gegenüber den bekannten Reglern verbesserte Temperaturentkoppelung auf. Diese Wirkung beruht - wie entsprechende Untersuchungen ergeben haben - darauf, daß der aus dem Fahrgastraum angesaugte Luftstrom nicht nur der Beaufschlagung des Temperaturfühlers zum Zwecke der Istwertfeststellung sondern darüberhinaus nach Passieren des Temperaturfühlers als Kühlmittel für den Regler dient, mit dem die von dem Regler an die Umgebung abgegebene Überschußwärme abgeführt wird. Es wird somit der Regler ständig selbsttätig auf der Temperatur des Fahrgastraumes, das der zu messenden Temperatur gehalten, so daß eine verfälschende Rückwirkung auf den Temperaturfühler nicht eintreten kann. Darüberhinaus ist der Platzbedarf des erfindungsgemäßen Reglers aufgrund des Entfalls eines gesonderten Ansaugkanals und der Integrierung der den Luftstrom erzeugenden Teile in das Reglergehäuse wesentlich verringert.

Weitere Ausführungsformen und Vorteile ergeben sich aus der nachfolgenden Beschreibung, in der die Erfindung anhand der beiliegenden, einen Schnitt durch den Regler wiedergebenden Zeichnung beispielsweise erläutert ist.

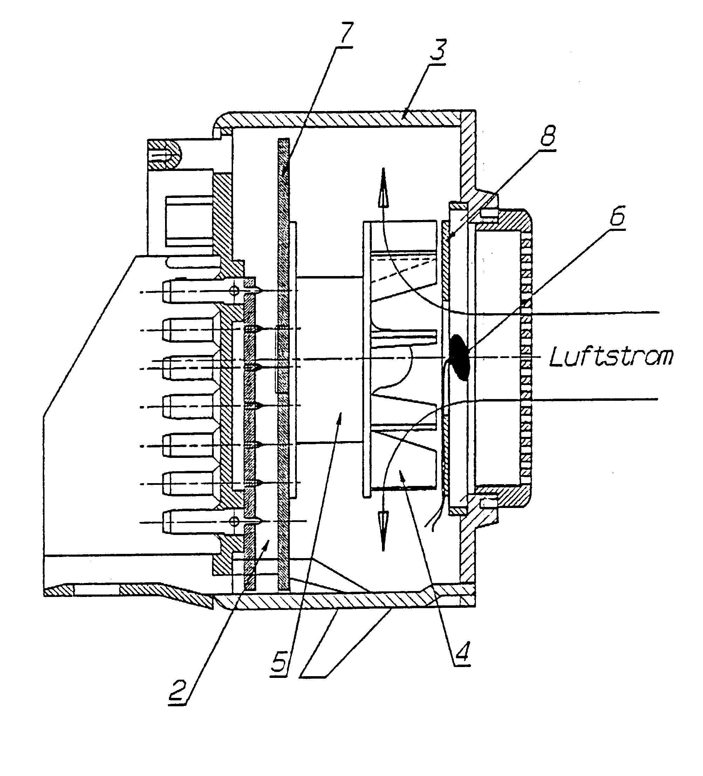

Der in der Zeichnung wiedergegebene Regler zur Innenraumtemperaturregelung von Kraftfahrzeugen besteht aus einem einen Sollwertgeber und ein Vergleichsglied 2 enthaltenden Gehäuse 3, einem Lüfter 4 mit Antriebsmotor 5 und einem Temperaturfühler 6 als Istwert-Aufnehmer, der temperaturentkoppelt gegenüber den übrigen Teilen des Reglers und sonstigen Wärme abgehenden Aggregaten des Kraftfahrzeuges im Ansaugluftstrom des Luft aus dem Fahrzeuginnenraum ansaugenden Lüfters 4 angeordnet ist. Der Temperaturfühler 6 und der Lüfter 4 sind offen im Reglergehäuse angeordnet. Hierbei ist als Lüfter ein Axial-Rädial-Lüfter vorgesehen, in dessen (axialem) Ansaugluftstrom der Temperaturfühler 6 angeordnet ist.

Der Lüfter 4 ist zusammen mit seinem Antriebsmotor 5 auf der die Regler-Bauteile tragenden Leiterplatte 7 befestigt. Es sind weiterhin die Ansaugöffnung für den Luftstrom von einem Stutzen 8 gebildet bezw. begrenzt und der Temperaturfühler 6 im wesentlichen mittig in dem Stutzen 8 gehalten und direkt elektrisch mit den der Istwert-Auswertung dienenden Bauteilen der Leiterplatte 7 verbunden. Zur Vermeidung von Luftwirbeln und eines unerwünschten Rückstromes von Luft ist das Schaufelrad des Lüfters 4 in unmittelbarer Nähe der plan gehaltenen Innenfläche des Ansaugstutzens 8, d.h in einem Abstand von etwa 1 bis 2 mm, angeordnet, wobei das Gehäuse an einer möglichst weit vom Lufteintritt entfernten Stelle mit das Abströmen der Luft ermöglichenden Öffnungen versehen ist.

**Patentansprüche**

1.  Regler zur Innenraumtemperaturregelung von Kraftfahrzeugen mit einem einen Sollwertgeber und ein Vergleichsglied enthaltenden Gehäuse, einem Lüfter mit Antriebsmotor und einem Temperaturfühler als Istwert-Aufnehmer, der temperatur-entkoppelt gegenüber den übrigen Teilen des Reglers und sonstigen Wärme abgehenden Aggregaten des Kraftfahrzeuges im Ansaugluftstrom des ansaugseitig mit dem Fahrzeuginnenraum verbundenen Lüfters (4) angeordnet ist, dadurch gekennzeichnet, daß der Temperaturfühler (6) und der Lüfter (4) offen im Reglergehäuse (3) angeordnet sind.

2. Regler nach Anspruch 1, dadurch gekennzeichnet, daß als Lüfter (4) ein Axial-Radial-Lüfter vorgesehen und der Temperaturfühler in dessen axialem Ansaugluftstrom angeordnet ist.

3. Regler nach Anspruch 1 oder 2, dadurch gekennzeichnet, daß der Lüfter (4) zusammen mit seinem Antriebsmotor (5) auf der die Regler-Bauteile tragenden Leiterplatte (7) befestigt ist.

4. Regler nach einem der Ansprüche 1 bis 3, dadurch gekennzeichnet, daß die Ansaugöffnung für den Luftstrom von einem Stutzen gebildet bzw. begrenzt und der Temperaturfühler im wesentlichen mittig in dem Stutzen gehalten und direkt elektrisch mit den der Istwert-Auswertung dienenden Bauteilen der Leiterplatte verbunden ist.

5. Regler nach einem der Ansprüche 1 bis 4, dadurch gekennzeichnet, daß das Schaufelrad des Lüfters (4) in unmittelbarer Nähe der plan gehaltenen Innenfläche des Ansaugstutzens (8) angeordnet und das Gehäuse an einer möglichst weit vom Lufteintritt entfernten Stelle mit das Abströmen der Luft ermöglichenden Öffnungen versehen ist.

6. Regler nach einem der Ansprüche 1 bis 5, dadurch gekennzeichnet, daß der Reglermotor elektronisch kommutiert ist.

Luftstrom